Europäisches Patentamt

European Patent Office

Office européen des brevets

(11) Publication number: **0 502 566 A1**

## EUROPEAN PATENT APPLICATION

(21) Application number: **92200490.8**

(22) Date of filing: **20.02.92**

(51) Int. Cl.5: **H04B 1/16, H04Q 7/00**

(30) Priority: **06.03.91 US 665048**
**06.03.91 US 665049**
**15.03.91 US 669708**

(43) Date of publication of application:
**09.09.92 Bulletin 92/37**

(84) Designated Contracting States:
**DE FR GB**

(71) Applicant: **DELCO ELECTRONICS CORPORATION**
**700 East Firmin Street**
**Kokomo Indiana 46902(US)**

(72) Inventor: **Gidwani, Sachal Bhagwan**
**14972 Bridlewood Drive**
**Carmel, Indiana 46032(US)**

(74) Representative: **Denton, Michael John et al**
**Patent Section 1st Floor Gideon House 28**
**Chapel Street**
**Luton Bedfordshire LU1 2SE(GB)**

(54) **Apparatus for communicating with a vehicle.**

(57) A vehicle (10) has a base unit (12) for bi-directional VHF communication with an electronic key (14) and with a non-vehicular station (22). To conserve battery energy, the electronic key (14) is normally maintained in a sleep state except for a low power wakeup circuit. For security purposes, a short range LF radio link carries a wakeup signal to initiate communications with the key (14). After wakeup, communications are continued over the VHF link using a modulated LF subcarrier riding on a VHF carrier.

Fig.1.

This invention relates to apparatus for communicating with a vehicle, for example, a system for communicating between a vehicle mounted unit and an electronic key and/or other unit.

It is known to open or unlock the door of a vehicle or perform another function by operation of a miniature remote unit or electronic key which is generally carried on a key chain of the vehicle operator. By pressing a button on the remote unit, a coded radio frequency signal is transmitted to a base unit on the vehicle and, if it recognizes the code as an authorized code, the base unit unlocks the door or performs another predetermined function. It is recognized that such systems are not limited to controlling vehicle functions but can also be used to control garage doors, security gates, or home entry, for example.

It is desirable to avoid handling the electronic key and pushing the button to activate the unit since it is sometimes inconvenient to do so. To carry out a passive control which does not require the actuation of a button, it has been proposed to provide a system in which the mere presence of the electronic key in the immediate vicinity of the base station is sufficient to activate the base station function. In conjunction with the presence of the electronic key, it is generally preferred to require a positive act, such as pulling on the door handle, to actuate the system. To avoid key operation when it is beyond the desired bounds of operation, it is further required that the system be non-responsive when the key is outside the prescribed bounds. A further consideration in designing such a system is the battery life for the remote unit. Since a miniature electronic key is required, the battery must be small and the unit must then be very conservative of energy to operate for an extended period. In that context, a battery life of many years is desired even though the unit is used for the control of several base stations.

A characteristic of a passive electronic key is that there is two-way communication between the key and the base unit. When the operator pulls on the door handle, for example, the base unit sends out a radio signal to any key within its range to request key identification and the key transmits its ID to the base. Since the base unit has bi-directional communication capability, it can be used for communicating with other stations to exchange data. Such a station may be an electronic toll gate which requests a vehicle ID and charges the toll to the owner's account. Another example is fleet management: when a vehicle leaves a fleet car park or returns, the vehicle ID and mileage can be sent to a monitor station by the base unit. These operations need not be limited to close proximity of the base station and the other station and it may be necessary to transfer data over distances greater than that allowed for passive key operation.

The present invention seeks to provide improved apparatus for communicating with a vehicle.

According to an aspect of the present invention, there is provided apparatus for communicating with a vehicle as specified in claim 1.

The invention can provide a system of communication between a vehicle and an electronic key and with another station to provide secure passive vehicle access as well as information exchange of vehicle data with the other station.

In an embodiment, there is provided a system for vehicle communication comprising a base unit mounted in a vehicle and a portable personal remote unit respectively having base VHF transmitter and receiver circuits and remote VHF transmitter and receiver circuits for bi-directional communication therebetween; power control means in the remote unit for normally maintaining the remote unit in an energy conserving sleep state wherein VHF communication is prevented and responsive to a coded wakeup signal for switching to an awake state; wakeup means in the base unit for generating the coded wakeup signal; a short range LF radio link for transmitting the coded wakeup signal to the remote unit to effect switching to an awake state whereby VHF communication of the remote unit is limited to a short range; and wherein the system includes a non-vehicular station having VHF transmitter and receiver circuits at the frequency of the said base unit for bi-directional communication between the base unit and the non-vehicular station over a long range greater than the short range communication between the base unit and the remote unit.

An embodiment of the present invention is described below, by way of illustration only, with reference to the accompanying drawings, in which:

Figure 1 is a diagram of an embodiment of system of base units and a remote unit;

Figure 2 is a block diagram of a base unit of the system of Figure 1;

Figure 3 is a block diagram of a remote unit of the system of Figure 1; and

Figure 4 is a chart of functions and signal exchanges between the base and remote units of the system of Figure 1 for vehicle access.

The ensuing description is for a system specifically designed for secure remote access to a plurality of vehicles via a radio link and for communication with another station for data exchange. In particular, the system is described as a vehicle access system which is passively activated to unlock a door when the door handle is pulled or otherwise actuated and which is further activated by a monitor station at a fleet car park to provide data including the vehicle identity and other information such as vehicle mileage.

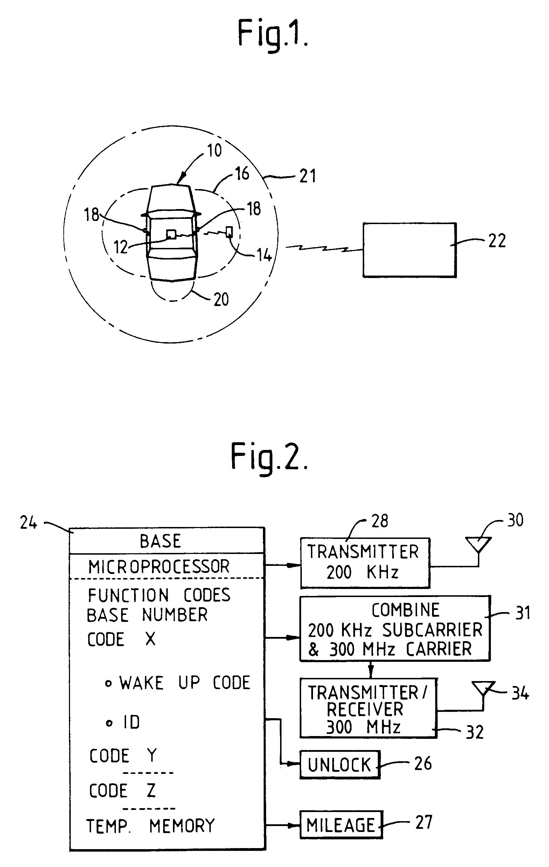

Figure 1 shows a base station or vehicle 10 equipped with a remote access system including a base unit 12 in the vehicle and a portable remote unit 14 typically carried in the vehicle operator's pocket or purse. The units are coupled by means of a radio frequency communication link effective over a short distance. As indicated by dotted lines 16 adjacent each vehicle door handle 18 and lines 20 adjacent the vehicle boot, minimum distances of only one or two metres (a few feet) are required, although a larger radius of communication up to line 21 is acceptable. Suitable radii may be about 1.5 metres (five feet) from the door handles for lines 16, 4.5 metres (fifteen feet) for line 21, 0.5 metres (two feet) from the boot lock for line 20, and 1 metre (four feet) for line 21 in the boot region. For security reasons, granting access by remote units 14 beyond the boundary 21 is prohibited; otherwise anyone might gain access if a distant electronic key could be activated by a base unit. It is intended that when the operator carries the remote unit within radio range of the base unit the system will automatically act to unlock the door without activation by the operator, provided that the identification of the remote unit can be verified. In some applications the units are activated only when the operator touches or tries to operate the door handle 18. Since more than one operator may use one or more of the same vehicles, there are other remote units, not shown, which may be programmed for vehicle access.

Figure 1 also shows a monitor station 22 which may be outside the boundary 21 and is located, for example, in a fleet car park or at its entrance. Then the monitor, using a long range radio frequency signal can poll each vehicle on a programmed list to obtain information from any vehicle in the car park, or may communicate with all vehicles approaching the entrance from either direction to open automatically a gate for entry of authorized vehicles and obtain mileage information, or to log out vehicles which are leaving. Two-way communication is required, to request the data and then to receive it.

The base unit 12, shown in Figure 2, includes a microprocessor based controller 24, at least one unlock or other function output circuit 26, at least one mileage or other vehicle data input circuit 27, a low frequency radio transmitter 28 and antenna 30 operating at 200 kHz, a circuit 31 for combining a 200 kHz subcarrier and a 300 MHz carrier, and a very high frequency transceiver or transmitter/receiver 32 and antenna 34 operating at 300 MHz.

The controller 24 stores several codes including a base number which is unique to the vehicle and serves as vehicle ID, and codes X, Y, and Z which relate to remote unit 14 and other respective remote units, not shown. Code X, which is typical, contains two components, a wakeup code and an identification code (ID) which are specific to the remote unit 14.

The controller 24 also stores a set of function codes which are common to all the remote units. The function code, when transmitted, determines the operation to be performed in the remote unit, e.g., to read out the ID or to update the ID of the remote unit. The wakeup code, and optionally the function code, is transmitted over the low frequency link to wake up a sleeping (that is, to activate a substantially inactive) remote unit. Thereafter, all communications are carried out over the VHF link. Data to be sent to the remote unit is used to modulate the 200 kHz subcarrier which rides on the 300 MHz carrier.

The low frequency signal is used for wakeup purposes to limit the range of device operation. The 200 kHz carrier has a decay constant of approximately 3 dB/unit of distance and thus decays rapidly with distance, making it possible to maintain a short transmission range. Low frequency noise sources also have a short range, so that there is less likelihood of an accidental wakeup due to noise. A consistent boundary cannot be maintained under all conditions because of temperature, voltage and other variables which affect the transmission range. This accounts for the minimum and maximum allowable boundaries 16 and 21. Thus, the remote unit must be near to the vehicle to receive a wakeup signal. Upon wakeup, the communication switches to the VHF band to complete the data exchange within a fraction of a second. Thus, it is assured that communication with the remote unit is restricted to a short range even though the VHF signal band is capable of long range transmission. Because of improved transmission at the VHF frequency, the ID and any other data is more reliably transferred than if the low frequency band is used.

The low frequency signal is also used for wakeup to minimize the power consumption by the receiver of the remote unit. A VHF receiver has relatively high power consumption while a low frequency receiver can be designed for ultra-low power consumption. Since the receiver must be on continuously in readiness for a wakeup call, battery life is extended by using a 200 kHz receiver.

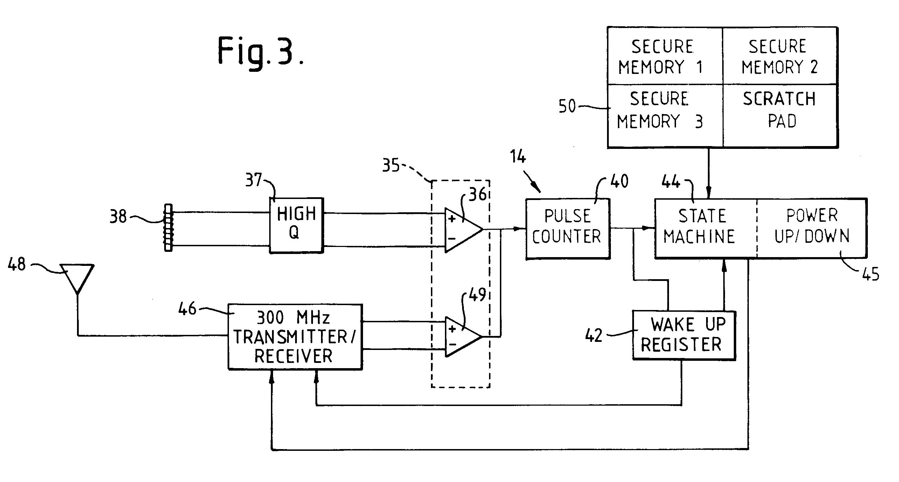

The remote unit 14, shown in Figure 3, employs a pair of 200 kHz receiver circuits 35, including a receiver 36. An antenna 38 is coupled to the receiver 36 via a high Q (high quality factor) circuit 37 for receiving signals from the base unit 12. In the absence of the high Q circuit, the low frequency signal from the base unit may not be strong enough to activate the receiver at the desired radii set forth above. The high Q circuit increases the sensitivity of the receiving apparatus enough to establish the desired effective range of the low frequency transmission. The antenna 38 is preferably a ferrite antenna capable of producing at least 3 mV signals when in the range of the base unit 12, and the receiver 36 is a comparator having its input terminals coupled across the antenna and which produces a 3 V output pulse when each 3 mV signal pulse is received. The low frequency signal is modulated by bursts of various length and the number of cycles in each burst is counted by a pulse counter 40 connected to the output of the receiver 36 and translates the various bursts into digital symbols A, B, C, etc. Symbols A and B comprise digital bits 0 and 1, respectively, while the other symbols are codes formed of a plurality of bits. The counter output is coupled to a wakeup register 42 and to a state machine 44 which comprises a logic circuit or intelligence circuit. The wakeup register 42 is also connected to the state machine 44 and may even be a part of the state machine.

Both the wakeup register 42 and the state machine 44 have outputs connected to a VHF transceiver or transmitter/receiver 46 operating at 300 MHz and which is coupled to an antenna 48 for coupling to the base unit 12. The transceiver 46 is, in turn connected to a 200 kHz receiver 49 which is one of the receiver circuits 35 and may be a comparator like comparator 36. The receiver 49 output is connected to the input of the pulse counter 40. The signal sent by the base unit 12 comprises a modulated 200 kHz subcarrier riding on a 300 MHz carrier. The transceiver 46 demodulates the carrier and outputs a 200 kHz signal to the receiver 49 which, like comparator 36, produces a pulse output for each pulse input on the subcarrier and delivers the pulses to the pulse counter. In this manner the pulse counter may be optimized for operation in the low frequency range and the data rate output by the counter is even lower. Thus the state machine and other processing circuitry can be designed for low data rates even though the carrier is at a VHF frequency.

The state machine 44 incorporates a power conservation function 45 which powers down the state machine to a low current level to deactivate most of the state machine and the transceiver 46 while the unit is "asleep", leaving just enough circuitry active to receive and process a wakeup signal. When a wakeup signal bearing the correct wakeup code is received, the rest of the system is powered up for full operation.

The state machine 44 is also connected to a memory 50 which is partitioned into several memory blocks, here shown as four blocks including three secure memory blocks, one corresponding to each base unit, and a scratch pad or temporary memory block. When the system is initially programmed, the state machine 44 determines which memory block is assigned to each vehicle and pointers are stored in the state machine to identify the correct memory address for each base number. Secure memory 1 is assigned to vehicle 10, and secure memories 2 and 3 are assigned to other vehicles. Thus, the transmitted base number can ultimately determine which memory block is accessed. Each secure memory block contains the same ID that is stored in the corresponding base unit.

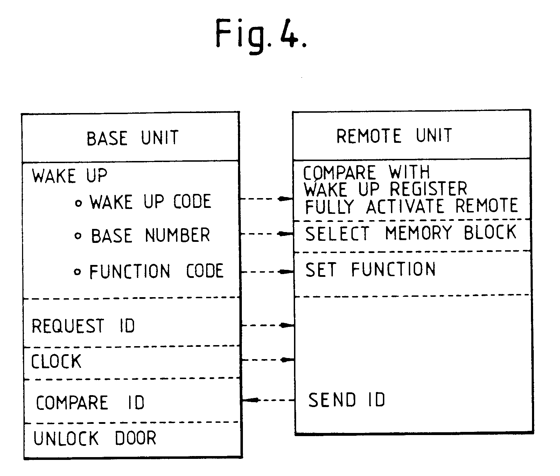

The communication between the base unit 12 and the remote unit 10 is shown in Figure 4. When the operator pulls on the vehicle door handle, the base unit sends a wakeup code to the remote unit via the low frequency radio link. If the remote unit is within the low frequency range it verifies the wakeup code by comparing it with the code in the wakeup register 42. If the codes match, the power up/down function of the state machine 44 fully activates the remote unit to power up the VHF transmitter/receiver 46. The memory block corresponding to the base number is selected, the function (send ID) is set according to the function code. The base unit then requests the remote ID by sending (by VHF) a request ID code followed by clock signals. The remote unit accesses the selected secure memory block and transmits the ID in the memory block by VHF, one bit at a time, paced by the clock signal. The base unit compares the received ID with the ID in its own memory and if they match the door is unlocked to allow entry.

Any secure memory block may be updated by furnishing new ID codes. This is desirable for security purposes and may occur, for example, each time the vehicle ignition key is removed. At that time, the wakeup procedure takes place and then a new ID is generated by the base unit and transmitted to the remote unit which stores it in the scratchpad memory. The new code is retransmitted back to the base unit to verify that it is correct. If so, the base unit commands that it be entered as the ID for that base by sending the "old" ID to the remote unit. If the remote unit verifies that the ID is correct for that base number, the scratchpad address is adopted as the secure memory block for that base number, and the old memory block is then used as a scratchpad.

**Claims**

1. Apparatus for communicating with a vehicle comprising a base unit (12) fitted to a vehicle and including base transmitter and base receiver circuits (32) adapted to operate at a first frequency; a remote unit (14) including remote transmitter and remote receiver circuits (46) adapted to operate at the first frequency for bi-directional communication with the base unit, power control means (44,45) for maintaining the remote unit in a substantially non-active state in which communication with the base unit is substantially prevented and in which the remote unit is responsive to an activation code for activating the remote unit to enable communication, the base unit including a second transmitter (28) adapted to operate at a second frequency for transmitting the activation code and the remote unit including a second receiver (36) adapted to operate at a second frequency for receiving the activation code; and a non-vehicular station (22) including station transmitter and station receiver circuits adapted to operate at the first frequency for bi-directional communication with the base unit; wherein the range of communication at the first frequency is greater than that at the second frequency.

2. Apparatus according to claim 1, wherein the power control means (44,45) includes a processing circuit (44) adapted to process signals received by and transmitted from the remote unit, and power supply means (45) adapted to reduce the power to the processing means and to the remote transmitter and remote receiver circuits so as to bring the remote unit to a substantially non-active state and to restore the power in response to the activation code.

3. Apparatus according to claim 1 or 2, wherein the second transmitter (28) and the second receiver (36) are adapted to operate at a low radio frequency.

4. Apparatus according to claim 3, wherein the second receiver (36) is an ultra low power receiver.

5. Apparatus according to any preceding claim, wherein the remote unit (14) includes an antenna (38) coupled to the second receiver (36) through a high quality factor filter circuit (37).

6. Apparatus according to any preceding claim, wherein the base unit (12) includes combining means (31) adapted to impose a low radio frequency subcarrier signal onto a VHF carrier signal and to modulate the subcarrier signal to carry data; the remote receiver circuit (46) being adapted to demodulate the carrier signal to yield the subcarrier signal.

7. Apparatus according to any preceding claim, wherein the remote unit (14) is portable.

# Fig.1.

# Fig.2.

# Fig.3.

EP 0 502 566 A1

# Fig.4.

| BASE UNIT | REMOTE UNIT |
|---|---|
| WAKE UP | COMPARE WITH WAKE UP REGISTER FULLY ACTIVATE REMOTE |
| ○ WAKE UP CODE | |
| ○ BASE NUMBER | SELECT MEMORY BLOCK |
| ○ FUNCTION CODE | SET FUNCTION |
| REQUEST ID | |
| CLOCK | |
| COMPARE ID | SEND ID |
| UNLOCK DOOR | |

European Patent
Office

# EUROPEAN SEARCH REPORT

Application Number

## DOCUMENTS CONSIDERED TO BE RELEVANT

EP 92200490.8

| Category | Citation of document with indication, where appropriate, of relevant passages | Relevant to claim | CLASSIFICATION OF THE APPLICATION (Int. Cl.5) |
|---|---|---|---|
| A | US - A - 4 857 917 (SATO) <br> * Fig. 2; abstract * | 1 | H 04 B 1/16 <br> H 04 Q 7/00 |
| A | WO - A - 90/04 888 (MOTOROLA) <br> * Fig. 1; page 5, line 2 - page 8, line 24 * | 1,2 | |
| A | US - A - 4 903 335 (SHIMIZU) <br> * Fig. !; abstract * | 1 | |

|  |  |  | TECHNICAL FIELDS SEARCHED (Int. Cl.5) |
|---|---|---|---|
|  |  |  | H 04 B <br> H 04 Q |

The present search report has been drawn up for all claims

| Place of search | Date of completion of the search | Examiner |
|---|---|---|
| VIENNA | 02-06-1992 | DRÖSCHER |

EPO FORM 1503 03.82 (P0401)